Europäisches Patentamt

European Patent Office

Office européen des brevets

(19)

(11) **EP 1 094 671 A1**

(12) **EUROPEAN PATENT APPLICATION**

| | |
|---|---|
| (43) Date of publication:<br>**25.04.2001 Bulletin 2001/17** | (51) Int Cl.[7]: **H04N 7/26**, G06T 7/20,<br>H04N 5/14 |
| (21) Application number: **99250368.0** | |
| (22) Date of filing: **19.10.1999** | |

| | |
|---|---|
| (84) Designated Contracting States:<br>**AT BE CH CY DE DK ES FI FR GB GR IE IT LI LU<br>MC NL PT SE**<br>Designated Extension States:<br>**AL LT LV MK RO SI** | (72) Inventors:<br>• **Blawat, Meinolf<br>30161 Hannover (DE)**<br>• **Winter, Marco<br>30173 Hannover (DE)** |
| (71) Applicant: **DEUTSCHE THOMSON-BRANDT<br>GMBH<br>78048 Villingen-Schwenningen (DE)** | (74) Representative: **Hartnack, Wolfgang, Dipl.-Ing.<br>Deutsche Thomson-Brandt GmbH<br>European Patent Operations<br>Karl-Wiechert-Allee 74<br>30625 Hannover (DE)** |

(54) **Method of motion estimation for a digital input video signal**

(57)     For motion estimation block matching can be used. The candidate motion vector to which the lowest matching error is related is selected as the motion vector. Subsampling of columns and/or lines can be used to reduce the computational and memory requirements. However, interlace signals require specific considerations because they are already vertically subsampled and a further vertical subsampling applied in the motion estimation processing can deteriorate severely the motion vector quality. Therefore the input signal (IP) is horizontally and vertically lowpass filtered (HVF) and horizontally subsampled (HSUB) by a factor of two. The motion vector search operates on the resulting video signal with a horizontal search step size of two (original) pixels and with a vertical search step size of one (original) pixel, whereby for calculating the cost function or block matching error in the reference block every second (original) pixel and (original) line only is evaluated. In an optional second block matching stage a fine motion estimation is carried out based on horizontally and vertically half-pel distance interpolated quincunx pixel patterns.

**Fig.1**

**Description**

The invention relates to a method of motion estimation for a digital input video signal, using block matching and subsampling.

Background

For motion estimation block matching can be used. An image to be encoded is split into blocks and each of these reference blocks is compared with candidate blocks of the same size within a search window in a preceding or subsequent image. The sum of the absolute values of the differences between the pixel values of the reference block and the corresponding pixel values of the candidate block is calculated for each candidate vector position. The result is called the 'cost function'. The candidate motion vector to which the lowest sum value, i.e. the minimum of the cost function, is related is then taken as the motion vector for the current reference block. Some motion estimation methods use all the pixels (pels) in the reference block and in the search area (full pel full search) in order to find the optimum motion vector. However, these methods require very fast, and thus expensive, hardware.
In order to reduce the required computational power, orthogonal pixel subsampling can be introduced in the block matching process.
The number of incorrectly determined motion vectors for a predetermined level of undersampling can be considerably reduced by using quincunx undersampling instead of orthogonal undersampling. In quincunx undersampling the pixels at the positions omitted in the preceding line or column, respectively, are used in each following line or column, respectively. Fixed quincunx undersampling can be applied either to the reference block or to the search area. EP-A-0 732 670 discloses block matching using such quincunx pixel subsampling.
Reduced computational requirements but still high vector accuracy can be achieved using hierarchical block matching. M. Bierling, "Displacement estimation by hierarchical block-matching", University Hanover, 3rd SPIE Symposium on Visual Communications and Image Processing, 9-11 November 1988, Cambridge, USA, describes hierarchical motion estimation based on a motion vector search in search windows having different spatial resolution, starting with a lowpass filtered and subsampled search window.
EP-A-0 661 667 discloses block matching using only MSBs (most significant bits) of pixel values.

Invention

As mentioned above, subsampling of the reference block and of the search window area can be carried out in order to reduce the computational and memory requirements. The omission of columns and/or lines (orthogonal undersampling) can, however, lead to unsatisfactory results since the correct candidate motion vector having the actually smallest cost function value will possibly not be found if it would be located at the position of an omitted line or column. This is a severe drawback because in some applications a motion vector accuracy of even more than ±1 pixel, i.e. for example ±1/2 pixel is required.
The above is basically true for progressive as well as interlace video signals. However, interlace signals require specific considerations because they are already vertically subsampled and a further vertical subsampling applied in the motion estimation processing can deteriorate severely the motion vector quality.
It is one object of the invention to disclose a block matching motion estimation with reduced computational and memory requirements but high vector accuracy, which is particularly suited for interlace video signals. This object is achieved by the method disclosed in claim 1.
The input signal is horizontally and vertically lowpass filtered and horizontally subsampled by a factor of two. The motion vector search operates on the resulting video signal with a horizontal search step size or resolution of two pixels and with a vertical search step size or resolution of one pixel (both resolutions expressed in original signal pixel pattern distances), whereby for calculating the cost function or block matching error in the reference block every second pixel and line only is evaluated (both expressed in original signal pixel pattern distances).
In an optional second block matching stage a fine motion estimation is carried out based on horizontally and vertically half-pel distance interpolated quincunx pixel patterns, leading finally to half-pel resolution motion vectors (expressed in original signal pixel pattern distances).
In principle, the inventive method concerns motion estimation for a digital input video signal and uses block matching of a reference pixel block with corresponding pixel blocks within a search window, and subsampling, with the steps:

- horizontally and vertically lowpass filtering the input video signal and horizontally 1:2 subsampling the filtered video signal;
- performing for a current reference block a motion vector search which operates on the filtered and horizontally subsampled video signal, with a horizontal search step size or resolution of two pixels and with a vertical search step size or resolution of one pixel, wherein for calculating a current block matching error or cost function value every second pixel and every second line only is evaluated and wherein said search step sizes and the pixel distances for said evaluation are expressed in original video signal pixel pattern distances.

Advantageously a fine motion estimation is carried out subsequently, based on horizontally and vertically half-pel distance interpolated quincunx pixel patterns, which leads finally to half-pel resolution motion vectors, expressed in original signal pixel pattern distances.

Advantageous additional embodiments of the inventive method are disclosed in the respective dependent claims.

Drawings

Embodiments of the invention are described with reference to the accompanying drawings, which show in:

Fig. 1     subsampling processing;
Fig. 2     pixels involved in a first motion estimation stage;
Fig. 3     frame with intermediate pixel positions in the vicinity of a vector landing point;
Fig. 4     pixels involved in a second motion estimation stage;
Fig. 5     motion vectors required for interlace signals.

Exemplary embodiments

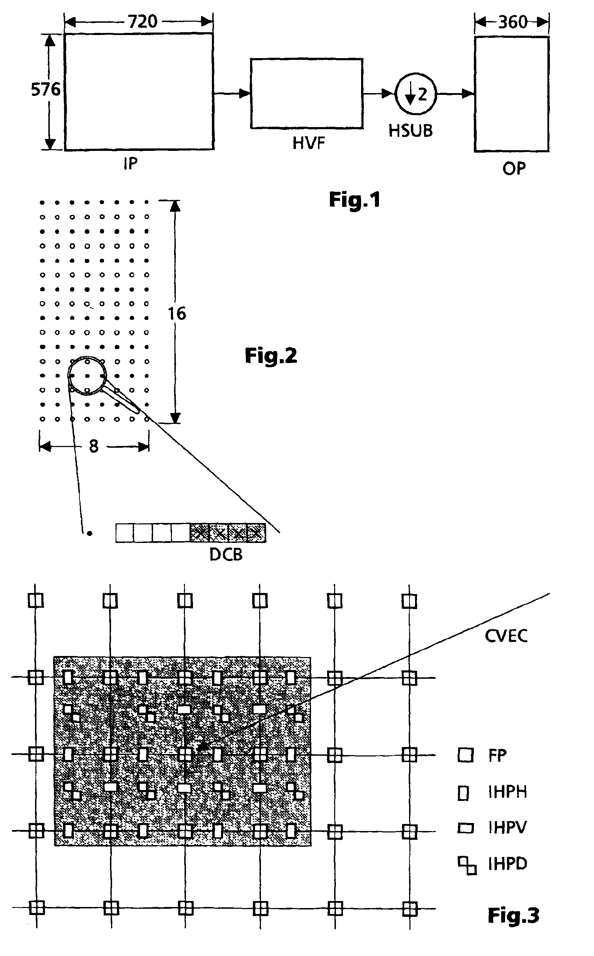

As depicted in Fig. 1 the motion estimation processing starts with horizontal and vertical lowpass filtering HVF of the input pictures IP having originally e.g. 720*576 active pixels per frame. After the horizontal or after the horizontal and vertical lowpass filtering a horizontal subsampling HSUB by a factor of two is performed. The output pictures OP have e.g. 360*576 active pixels per frame in which a reference macroblock may have a size of 8 pixels * 16 lines.
Fig. 2 shows the 8 pixels and 16 lines of a reference macroblock. The search window used in the block matching may have a size of $\pm 32$ (subsampled) pixels horizontally and $\pm 32$ lines vertically. Based on these figures the corresponding reference block pixels are to be compared with corresponding pixels in the search window in the predicted frame at 65 pels*65 lines = 4225 candidate block positions. The candidate block search step size and thus resulting accuracy of the vectors calculated in the first motion estimation stage, i.e. the coarse motion estimation stage, is $\pm 2$ (original) pixels horizontally and $\pm 1$ (original) line vertically. In order to reduce the computational power, the coarse motion estimation is carried out in the following way: *cost function*

$$\text{mean absolute error} = \sum_{i=0}^{7} \sum_{j=0}^{7} |{}^4P_{i,2j} - {}^4p_{i,2j}|$$

wherein i = horizontal index, j = vertical index,

${}^4P$ = e.g. four most significant bits of pixel values in reference block,
${}^4p$ = e.g. four most significant bits of pixel values in the blocks of the prediction frame.

The pixels used for the cost function accumulation are shown in Fig. 2 as black dots whereas the white dot pixels are disregarded. From the e.g. eight bits per pixel value are e.g. the four lower bits don't care bits DCB. The spatial position of the minimum of the calculated cost function usually has still a deviation from the correct motion vector position. This deviation can be minimised using in a subsequent stage a fine motion estimation.
The operation in the fine motion estimation stage is also based on interpolated values of additional pixel lying between the original pixels in the reference frame. These interpolated pixel values can be derived from the original pixel values using a [1,2,1] filter. Fig. 3 shows a reference frame with intermediate pixel positions in the vicinity of the landing point of a coarse vector CVEC. This vicinity (dark area) includes adjacent original pixels FP, horizontally interpolated half pixels IHPH, vertically interpolated half pixels IHPV, and diagonally interpolated half pixels IHPD, in total 34 pixel positions. Generally, for each macroblock in the prediction frame a search is made in the vicinity of the reference macroblock position within the reference frame, which means that e.g. 34 block positions are searched for the minimum matching error.

It is also possible to search for the position of the reference picture reference block a corresponding block position within the prediction frame, which means that the interpolated pixel values are to be calculated for the prediction picture.

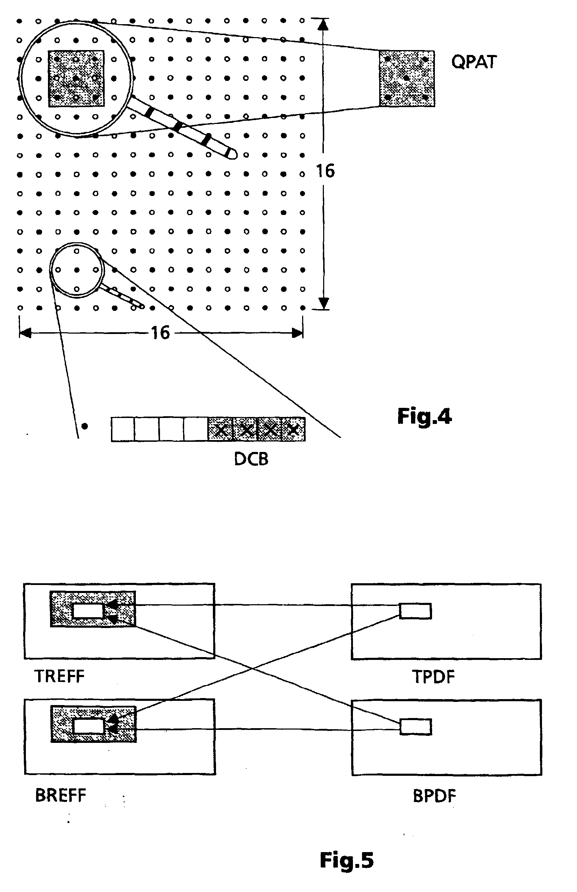

In the fine motion estimation stage the block size is e.g. 16 (original) pixels * 16 (original) lines as depicted in Fig. 4. QPAT shows a quincunx pattern of black-dot pixel values involved in the calculations. The search step size is 1/2 (original) pixel horizontally and 1/2 (original) line vertically. Again, from the e.g. eight bits per pixel value only the e.g. four most significant bits can be used for the cost function calculation accumulations whereas the remaining bits are don't care bits DCB.

The fine motion estimation is carried out in the following way:

*cost function*

$$\mathrm{mae} = \sum_{i=0}^{15} \sum_{j=0}^{15} |{}^{4}\mathrm{P}_{2i+\mathrm{mod}(j,2),j} - {}^{4}\mathrm{p}_{2i+\mathrm{mod}(j,2),j}|$$

wherein mae = mean absolute error, i = horizontal index in half-pel raster, j = vertical index in half-pel raster, mod(j,2) = 0 if j even and mod(j,2) = 1 if j odd.

The inventive motion estimation improves the subjective picture quality, in particular for interlaced pictures. Fig. 5 shows a top reference field TREFF, a bottom reference field BREFF, a top prediction field TPDF, and a bottom prediction field BPDF from an interlaced picture sequence. Fig. 5 shows the fine motion estimation vector predictions from the prediction fields to the reference fields. The blocks in each field can be predicted using a vector from each of the two following fields.

In the coarse motion estimation and optionally in the fine motion estimation the direction of the search is viceversa.

**Claims**

1. Method of motion estimation for a digital input video signal (IP), using block matching of a reference pixel block with corresponding pixel blocks within a search window, thereby using subsampling, characterised by the steps:

    - horizontally and vertically lowpass filtering (HVF) the input video signal (IP) and horizontally 1:2 subsampling (HSUB) the filtered video signal;
    - performing for a current reference block a motion vector (CVEC) search which operates on the filtered and horizontally subsampled video signal (OP), with a horizontal search step size or resolution of two pixels and with a vertical search step size or resolution of one pixel, wherein for calculating a current block matching error or cost function value every second pixel and every second line only is evaluated and wherein said search step sizes and the pixel distances for said evaluation are expressed in original video signal pixel pattern distances.

2. Method according to claim 1, wherein subsequently a fine motion estimation is carried out based on horizontally and vertically half-pel distance interpolated quincunx pixel patterns (QPAT), leading finally to half-pel resolution motion vectors, expressed in original signal pixel pattern distances.

3. Method according to claim 1 or 2, wherein said input video signal (IP) is an interlaced video signal.

4. Method according to claim 3, wherein the motion vector for a top field block (TREFF) and/or a bottom field block (BREFF) is calculated using top and bottom field blocks (TPDF, BPDF) of the corresponding adjacent frame.

5. Method according to any of claims 1 to 4, wherein from the pixel values involved in the matching error or cost function value calculations in the coarse and/or in the fine motion estimation stages some least significant bits (DCB) of each pixel value are not considered.

6. Method according to any of claims 1 to 5, wherein the coarse motion estimation is carried out using the following mean absolute error for the cost function:

$$\text{mean absolute error} = \sum_{i=0}^{7} \sum_{j=0}^{7} |^{4}P_{i,2j} - {}^{4}p_{i,2j}| \,,$$

wherein i = horizontal index, j = vertical index, $^{4}P$ = e.g. four most significant bits of pixel values in reference block, $^{4}p$ = e.g. four most significant bits of pixel values in the blocks of the prediction frame.

7. Method according to claim 6 but not dependent on claim 1, wherein the fine motion estimation is carried out using the following mean absolute error MAE for the cost function:

$$\text{MAE} = \sum_{i=0}^{15} \sum_{j=0}^{15} |^{4}P_{2i+\text{mod}(j,2),j} - {}^{4}p_{2i+\text{mod}(j,2),j}|$$

wherein i = horizontal index in half-pel raster, j = vertical index in half-pel raster, mod(j,2) = 0 if j even and mod(j, 2) = 1 if j odd.

Fig.1

Fig.2

CVEC

□ FP

▯ IHPH

▭ IHPV

▯ IHPD

Fig.3

**Fig.4**

QPAT

DCB

16

16

TREFF

TPDF

BREFF

BPDF

**Fig.5**

## EUROPEAN SEARCH REPORT

**European Patent Office**

**Application Number**

EP 99 25 0368

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,Y | EP 0 732 670 A (THOMSON BRANDT GMBH) 18 September 1996 (1996-09-18) * the whole document * | 1-3,5 | H04N7/26 G06T7/20 H04N5/14 |
| A | | 4,6,7 | |
| Y | US 5 278 915 A (PECOT MICHEL ET AL) 11 January 1994 (1994-01-11) * abstract * * column 1, line 19 - line 44 * | 1-3,5 | |
| A | EP 0 446 001 A (VICTOR COMPANY OF JAPAN) 11 September 1991 (1991-09-11) * column 1, line 11 - column 6, line 30; claims * | 1-7 | |
| A | US 5 557 341 A (CHRISTENSSON BJOERN ET AL) 17 September 1996 (1996-09-17) * abstract * * column 2, line 20 - line 46 * | 1-3 | |
| A | EP 0 410 192 A (BOSCH GMBH ROBERT) 30 January 1991 (1991-01-30) * abstract * | 1 | **TECHNICAL FIELDS SEARCHED (Int.Cl.7)** H04N G06T |
| A | US 5 635 994 A (KEESEN HEINZ-WERNER ET AL) 3 June 1997 (1997-06-03) * the whole document * | 1 | |
| A,D | EP 0 661 667 A (THOMSON BRANDT GMBH) 5 July 1995 (1995-07-05) * the whole document * | 5 | |
| A | US 5 712 799 A (PURCELL STEPHEN C ET AL) 27 January 1998 (1998-01-27) * abstract * * column 2, line 57 - column 4, line 23 * * column 4, line 36 - line 62 * | 5 | |

The present search report has been drawn up for all claims

| Place of search | Date of completion of the search | Examiner |
|---|---|---|
| BERLIN | 30 December 1999 | Gries, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 1 094 671 A1

**ANNEX TO THE EUROPEAN SEARCH REPORT
ON EUROPEAN PATENT APPLICATION NO.**

EP 99 25 0368

This annex lists the patent family members relating to the patent documents cited in the above-mentioned European search report.
The members are as contained in the European Patent Office EDP file on
The European Patent Office is in no way liable for these particulars which are merely given for the purpose of information.

30-12-1999

| Patent document cited in search report | | Publication date | Patent family member(s) | | Publication date |
|---|---|---|---|---|---|
| EP 0732670 | A | 18-09-1996 | DE | 19509418 A | 19-09-1996 |
| | | | DE | 59602215 D | 22-07-1999 |
| | | | JP | 8315151 A | 29-11-1996 |
| | | | US | 5982910 A | 09-11-1999 |
| US 5278915 | A | 11-01-1994 | FR | 2663178 A | 13-12-1991 |
| | | | AT | 171291 T | 15-10-1998 |
| | | | DE | 69130190 D | 22-10-1998 |
| | | | DE | 69130190 T | 22-04-1999 |
| | | | EP | 0460997 A | 11-12-1991 |
| | | | WO | 9119264 A | 12-12-1991 |
| | | | JP | 5501188 T | 04-03-1993 |
| EP 0446001 | A | 11-09-1991 | JP | 3256485 A | 15-11-1991 |
| | | | DE | 69110708 D | 03-08-1995 |
| | | | US | 5142360 A | 25-08-1992 |
| US 5557341 | A | 17-09-1996 | SE | 469866 B | 27-09-1993 |
| | | | DE | 69214444 D | 14-11-1996 |
| | | | DE | 69214444 T | 20-02-1997 |
| | | | EP | 0579692 A | 26-01-1994 |
| | | | JP | 6506578 T | 21-07-1994 |
| | | | SE | 9101113 A | 13-10-1992 |
| | | | WO | 9219068 A | 29-10-1992 |
| EP 0410192 | A | 30-01-1991 | DE | 3924541 A | 31-01-1991 |
| | | | DE | 59009871 D | 21-12-1995 |
| US 5635994 | A | 03-06-1997 | DE | 4342305 A | 29-06-1995 |
| | | | CN | 1117694 A | 28-02-1996 |
| | | | DE | 59408390 D | 15-07-1999 |
| | | | EP | 0658056 A | 14-06-1995 |
| | | | JP | 7203451 A | 04-08-1995 |
| | | | SG | 49199 A | 18-05-1998 |
| EP 0661667 | A | 05-07-1995 | DE | 4344924 A | 10-08-1995 |
| | | | CN | 1115548 A | 24-01-1996 |
| | | | JP | 7226936 A | 22-08-1995 |
| | | | SG | 43904 A | 14-11-1997 |
| US 5712799 | A | 27-01-1998 | AU | 5528096 A | 30-10-1996 |
| | | | EP | 0819284 A | 21-01-1998 |
| | | | JP | 11503585 T | 26-03-1999 |
| | | | WO | 9632807 A | 17-10-1996 |

EPO FORM P0459

For more details about this annex : see Official Journal of the European Patent Office, No. 12/82

9